# EUROPEAN PATENT APPLICATION

(11) **EP 3 575 388 A1**
(43) Date of publication of application: **04.12.2019**
(21) Application number: 17893837.9
(22) Date of filing: 21.12.2017
(51) Int. Cl.: C10M 135/36, C10M 135/26, C10M 161/00, F16H 57/04, C10M 145/14, C10N 20/02, C10N 30/06, C10N 30/12, C10N 40/02, C10N 40/04, C10N 40/08, C10N 40/12, C10N 40/22, C10N 40/25

(54) **LUBRICANT COMPOSITION FOR TRANSMISSION, METHOD FOR LUBRICATING TRANSMISSION, AND TRANSMISSION**

(30) Priority: 25.01.2017 JP 2017011425
(71) Applicant: Idemitsu Kosan Co.,Ltd., Tokyo 100-8321 (JP)
(72) Inventor: KOBAYASHI, Kenji, Ichihara-shi Chiba 299-0107 (JP); YANAGIHARA, Takashi, Ichihara-shi Chiba 299-0107 (JP)
(74) Representative: Vossius & Partner Patentanwälte Rechtsanwälte mbB
(86) International application number: PCT/JP2017/046014
(87) International publication number: WO 2018/139130

(57) **Abstract**

The present invention provides a lubricating oil composition for a transmission which is excellent in seizure resistance and copper corrosion resistance, and which contains a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2), a method for lubricating a transmission, including using the same, and a transmission provided with the same.

## Description

### Technical Field

The present invention relates to a lubricating oil composition for a transmission, a method for lubricating a transmission, including using the same, and a transmission provided with the same.

### Background Art

Lubricating oil compositions to be used in transmissions used for vehicles, and transmissions for construction or civil engineering machines are generally required to have gear characteristics such as seizure resistance. Sulfur-containing additives are widely used for improving the gear characteristics such as the seizure resistance (for example, PTLs 1 and 2).

In recent years, in order to deal with environmental problems, hybrid vehicles and electric vehicles are widely used as automobiles, which are equipped with electric parts such as an electric motor and a generator, and in which at least a part of a power source is replaced with electric power. In the automobiles, when the electric motor is cooled by an oil cooling method, for example, as described in PTLs 1 and 2, a lubricating oil composition is commonly used for the transmission and the cooling of the electric motor.

### Citation List

### Patent Literature

PTL 1: WO 2011-080970
PTL 2: JP 2014-177603 A

### Summary of Invention

### Technical Problem

However, when the lubricating oil composition described in PTL 1 or 2 is used for an electric motor of an oil cooling type, since the electric motor and the lubricating oil composition directly come into contact with each other, a sulfur-containing compound contained in the lubricating oil composition may cause corrosion of copper used in the electric motor. As described above, seizure resistance and copper corrosion resistance are conflicting performances, and the development of a lubricating oil composition with both the above performances has been required to deal with more severe environmental problems, and becomes urgent issues.

The present invention has been made in view of the above circumstances, and an object thereof is to provide a lubricating oil composition for a transmission which is excellent in seizure resistance and copper corrosion resistance, a method for lubricating a transmission, including using the same, and a transmission provided with the same.

### Solution to Problem

As a result of earnest studies, the present inventors have found that the above problems can be solved by the following invention. Specifically, the present invention provides a lubricating oil composition for a transmission having a constitution mentioned below, a method for lubricating a transmission, including using the same, and a transmission provided with the same.

1. A lubricating oil composition for a transmission, containing a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).
2. A method for lubricating a transmission, including using a lubricating oil composition for a transmission containing a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).
3. A transmission, which is provided with a lubricating oil composition for a transmission containing a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).

### Advantageous Effects of Invention

According to the present invention, a lubricating oil composition for a transmission which is excellent in seizure resistance and copper corrosion resistance, a method for lubricating a transmission, including using the same, and a transmission provided with the same can be provided.

### Description of Embodiments

Hereinafter, an embodiment of the present invention (hereinafter, also referred to as "present embodiment") will be described. In this description, the numerical values of "or more" and "or less" relating to the description of a numerical range are numerical values that can be combined in any desired manner.

### [Lubricating oil composition for transmission]

The lubricating oil composition for a transmission according to the present embodiment contains a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).

### [Base oil (A)]

The lubricating oil composition according to the present embodiment contains a base oil (A). The base oil (A) may be a mineral oil or a synthetic oil.

Examples of the mineral oil include topped crudes obtained through atmospheric distillation of crude oils such as paraffin base crude oils, naphthene base crude oils and intermediate base crude oils; distillates obtained through reduced-pressure distillation of such topped crudes; mineral oils obtained by purifying the distillates through one or more purification treatments of solvent deasphalting, solvent extraction, hydrocracking, solvent dewaxing, catalytic dewaxing or hydrorefining, for example, a light neutral oil, an intermediate neutral oil, a heavy neutral oil, and a bright stock; and mineral oils obtained through isomerization of wax produced through Fischer-Tropsch synthesis (GTL wax).

In addition, the mineral oil may also be those grouped in Groups 1, 2 and 3 in the base oil category by API (American Petroleum Institute), and those grouped in Groups 2 and 3 are preferred from the viewpoint of preventing sludge formation and attaining viscosity characteristics and stability against oxidation degradation.

Examples of the synthetic oil include poly-α-olefins such as polybutene, ethylene-α-olefin copolymers, α-olefin homopolymers or copolymers; various ester oils such as polyol esters, dibasic acid esters and phosphate esters; various ethers such as polyphenyl ethers; polyglycols; alkylbenzenes; and alkylnaphthalenes.

For the base oil (A), the above mineral oils may be used alone or in combination of two or more kinds thereof, or may be used in combination with one or more kinds of the above synthetic oils.

The viscosity of the base oil (A) is not specifically limited, but the kinematic viscosity at 100°C thereof is preferably 1 mm²/s or more, more preferably 1.5 mm²/s or more, and even more preferably 2 mm²/s or more, from the viewpoint of achieving an appropriate viscosity of the lubricating oil composition for a transmission. The upper limit is preferably 20 mm²/s or less, more preferably 15 mm²/s or less, and even more preferably 10 mm²/s or less. The kinematic viscosity at 40°C of the base oil (A) is preferably 5 mm²/s or more, more preferably 6 mm²/s or more, and even more preferably 7 mm²/s or more. The upper limit is preferably 80 mm²/s or less, more preferably 60 mm²/s or less, and even more preferably 40 mm²/s or less. The viscosity index of the base oil is preferably 85 or more, more preferably 90 or more, and even more preferably 100 or more. In this description, the kinematic viscosity and the viscosity index are values measured using a glass capillary viscometer according to JIS K 2283:2000. When the kinematic viscosity and the viscosity index of the base oil are within the above ranges, the lubricating oil composition for a transmission is more appropriate, and the seizure resistance and the copper corrosion resistance are improved.

From the viewpoint of making the lubricating oil composition for a transmission more appropriate and improving the seizure resistance and the copper corrosion resistance, the content of the base oil (A) based on the total amount of the composition is generally 50% by mass or more, preferably 60% by mass or more, more preferably 65% by mass or more, and even more preferably 70% by mass or more. The upper limit is preferably 97% by mass or less, more preferably 95% by mass or less, and even more preferably 93% by mass or less.

### [Sulfur-containing compound (B)]

The lubricating oil composition for a transmission according to the present embodiment contains a sulfur-containing compound (B) having no -Sₙ₁₁- (where n₁₁ is an integer of 2 or more). When the lubricating oil composition for a transmission according to the present embodiment does not contain the sulfur-containing compound (B), it is not possible to achieve both the seizure resistance and the copper corrosion resistance at the same time.

The sulfur-containing compound (B) having no -Sₙ₁₁- (where n₁₁ is an integer of 2 or more) is not specifically limited, as long as it does not have a structure in which at least two sulfur atoms are bonded such as -S-S- and -S-S-S-, and contains a sulfur atom, but is preferably a compound represented by the following general formula (1), from the viewpoint of improving the seizure resistance and the copper corrosion resistance.

S(̵R¹¹COOR¹²)₂ (1)

In the general formula (1), R¹¹ is a hydrocarbon group having 1 or more and 8 or less carbon atoms, and R¹² is a hydrocarbon group having 1 or more and 30 or less carbon atoms. Plural R^{11'}s may be the same or different and plural R^{12'}s may be the same or different.

From the viewpoint of improving the seizure resistance and the copper corrosion resistance, the hydrocarbon group for R¹¹ is preferably an alkylene group or an alkenylene group, and more preferably an alkylene group. From the same viewpoint, the number of the carbon atoms is preferably 6 or less, more preferably 4 or less, even more preferably 3 or less, and particularly preferably 2 or less.

Examples of the alkylene group for R¹¹ include various propylene groups (hereinafter, "those collectively including those being linear or branched, and isomers thereof" are abbreviated as "various") such as a methylene group, a 1,1-ethylene group, a 1,2-ethylene group, a 1,3-propylene group, a 1,2-propylene group, and a 2,2-propylene group, various butylene groups, various pentylene groups, various hexylene groups, various heptylene groups, and various octylene groups. In addition, examples of the alkenylene group include those in which two hydrogen atoms are removed from the above alkylene groups.

From the viewpoint of improving the seizure resistance and the copper corrosion resistance, the hydrocarbon group for R¹² is preferably an alkyl group, an alkenyl group, a cycloalkyl group, an aryl group, and an arylalkyl group, more preferably an alkyl group or an alkenyl group, and even more preferably an alkyl group.

Examples of the alkyl group include a methyl group, an ethyl group, various propyl groups such as a n-propyl group and an isopropyl group, various butyl groups such as a n-butyl group, an isobutyl group, a sec-butyl group, and a tert-butyl group, various pentyl groups, various hexyl groups, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, various octadecyl groups, various nonadecyl groups, various eicosyl groups, various heneicosyl groups, various docosyl groups, various tricosyl groups, various tetracosyl groups, various pentacosyl groups, various hexacosyl groups, various heptacosyl groups, various octacosyl groups, various nonacosyl groups, and various triacontyl groups. In addition, examples of the alkenyl group include those in which two hydrogen atoms are removed from the alkyl groups.

From the viewpoint of improving the seizure resistance and the copper corrosion resistance, the number of the carbon atoms of the alkyl group or the alkenyl group is preferably 2 or more, more preferably 4 or more, even more preferably 8 or more, and particularly preferably 12 or more. The upper limit is preferably 22 or less, more preferably 20 or less, even more preferably 18 or less, and particularly preferably 15 or less.

Preferred examples of the cycloalkyl group include those having 6 or more and 12 or less carbon atoms, such as a cyclohexyl group, various methylcyclohexyl groups, various ethylcyclohexyl groups, and various dimethylcyclohexyl groups. Preferred examples of the aryl group include those having 6 or more and 12 or less carbon atoms, such as a phenyl group, various methylphenyl groups, various ethylphenyl groups, various dimethylphenyl groups, various propylphenyl groups, various trimethylphenyl groups, various butylphenyl groups, and various naphthyl groups. Preferred examples of the arylalkyl group includes those having 7 or more and 12 or less carbon atoms, such as a benzyl group, a phenethyl group, various phenylpropyl groups, various phenylbutyl groups, various methylbenzyl groups, various ethylbenzyl groups, various propylbenzyl groups, various butylbenzyl groups, and various hexylbenzyl groups.

In the above general formula (1), as a more specific compound of the sulfur-containing compound (B) according to the present embodiment, preferred is a compound in which R¹¹ is an alkylene group having 1 or more and 8 or less carbon atoms and R¹² is an alkyl group having 1 or more and 30 or less carbon atoms; more preferred is a compound in which R¹¹ is an alkylene group having 1 or more and 6 or less carbon atoms and R¹² is an alkyl group having 4 or more and 20 or less carbon atoms; even more preferred is a compound in which R¹¹ is an alkylene group having 1 or more and 4 or less carbon atoms and R¹² is an alkyl group having 8 or more and 18 or less carbon atoms; and particularly preferred is a compound in which R¹¹ is an alkylene group having 1 or more and 2 or less carbon atoms and R¹² is an alkyl group having 12 or more and 15 or less carbon atoms.

From the viewpoint of improving the seizure resistance and the copper corrosion resistance, the content of the sulfur-containing compound (B) based on the total amount of the composition is preferably 0.1% by mass or more, more preferably 0.2% by mass or more, and even more preferably 0.3% by mass or more. The upper limit is preferably 3% by mass or less, more preferably 2% by mass or less, and even more preferably 1% by mass or less. According to present embodiment, the sulfur-containing compound (B) may be used alone, or in combination of two or more kinds thereof.

### [Thiadiazole compound (C)]

The lubricating oil composition for a transmission according to the present embodiment contains a thiadiazole compound (C) having an -Sₙ₂₁-R²¹ group (where R²¹ is a linear hydrocarbon group having 1 or more and 24 or less carbon atoms, and n₂₁ is 1 or 2). When the lubricating oil composition for a transmission according to the present embodiment does not contain the thiadiazole compound (C), particularly the seizure resistance is lowered, thereby failing to achieve both the seizure resistance and the copper corrosion resistance at the same time.

The thiadiazole compound (C) having an -Sₙ₂₁-R²¹ group (where R²¹ is a linear hydrocarbon group having 1 or more and 24 or less carbon atoms, and n₂₁ is 1 or 2) is not specifically limited, as long as it is a compound having an -Sₙ₂₁-R²¹ group and a thiadiazole structure, but is preferably at least one compound selected from compounds represented by the following general formulae (2-1) to (2-3), and more preferably a compound represented by the general formula (2-1), from the viewpoint of improving the seizure resistance and the copper corrosion resistance. For example, the compound represented by the following general formula (2-1) is a compound having -Sₙ₂₂-R²² and -Sₙ₂₃-R²³ as the -Sₙ₂₁-R²¹ group and having a thiadiazole structure, and corresponds to "a thiadiazole compound having an -Sₙ₂₁-R²¹ group (where R²¹ is a linear hydrocarbon group having 1 or more and 24 or less carbon atoms, and n₂₁ is 1 or 2)". The compound represented by the following general formulas (2-2) and (2-3) may be the same as the compound represented by the general formula (2-1), and corresponds to "a thiadiazole compound having an -Sₙ₂₁-R²¹ group (where R²¹ is a linear hydrocarbon group having 1 or more and 24 or less carbon atoms, and n₂₁ is 1 or 2)".

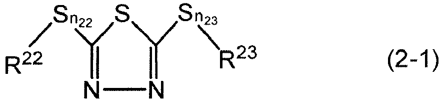

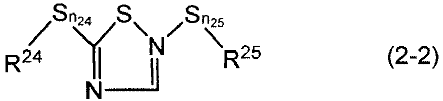

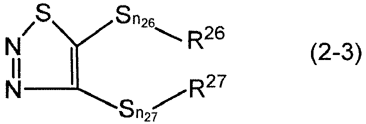

In the general formulae (2-1) to (2-3), R²² to R²⁷ each independently represent a linear hydrocarbon group having 1 or more and 24 or less carbon atoms, and n₂₂ to n₂₇ are each independently 1 or 2.

When R²¹ to R²⁷ are each a hydrocarbon group other than a linear hydrocarbon group, for example, a branched hydrocarbon group or a cyclic hydrocarbon group, the copper corrosion resistance is particularly lowered, thereby failing to achieve both the seizure resistance and the copper corrosion resistance at the same time. The linear hydrocarbon group for R²¹ to R²⁷ is preferably a linear alkyl group or a linear alkenyl group, and is more preferably a linear alkyl group, from the viewpoint of improving the seizure resistance and the copper corrosion resistance. Preferred examples of the linear alkyl group and the linear alkenyl group include linear alkyl groups and linear alkenyl groups selected among the alkyl groups and the alkenyl groups exemplified as R¹² in the above general formula (1).

From the viewpoint of improving the seizure resistance and the copper corrosion resistance, the number of carbon atoms of the linear hydrocarbon group for R²¹ to R²⁷ is preferably 2 or more, more preferably 3 or more, and even more preferably 4 or more. The upper limit is preferably 20 or less, more preferably 16 or less, and still more preferably 10 or less.

In addition, R²² to R²⁷ may be the same or different, but considering the availability of the thiadiazole compound (C), R²² and R²³ in the general formula (2-1) are preferably the same, R²⁴ and R²⁵ in the general formula (2-2) are preferably the same, and R²⁶ and R²⁷ in the general formula (2-3) are preferably the same.

n₂₁ to n₂₇ are each independently 1 or 2, and from the viewpoint of improving the seizure resistance and the copper corrosion resistance, are each preferably 2. n₂₂ to n₂₇ may be the same or different, but considering the availability of the thiadiazole compound (C), n₂₂ and n₂₃ in the general formula (2-1) are preferably the same, n₂₄ and n₂₅ in general formula (2-2) are preferably the same, and n₂₆ and n₂₇ in the general formula (2-3) are preferably the same.

The content of the thiadiazole compound (C) based on the total amount of the composition is preferably 0.01% by mass or more, more preferably 0.03% by mass or more, and even more preferably 0.05% by mass or more, from the viewpoint of improving the seizure resistance and the copper corrosion resistance. The upper limit is preferably 2% by mass or less, more preferably 1% by mass or less, and even more preferably 0.5% by mass or less.

### [Viscosity index improver (D)]

The lubricating oil composition for a transmission according to the present embodiment preferably contains a viscosity index improver (D) from the viewpoint of improving the seizure resistance and the copper corrosion resistance.

From the viewpoint of improving the seizure resistance and the copper corrosion resistance, preferred examples of the viscosity index improver include a polymethacrylate-based viscosity index improver such as polymers and copolymers of (meth)acrylic esters, for example, an alkyl (meth)acrylate; an olefin polymer-based viscosity index improver such as an ethylene-propylene copolymer and polybutylene; and a styrene polymer-based viscosity index improver such as a polyalkylstyrene, a styrene-diene copolymer, and a styrene-isoprene copolymer. More preferred are polymethacrylates. According to the present embodiment, the viscosity index improver may be used alone or in combination of two or more kinds thereof.

The polymethacrylate-based viscosity index improver includes dispersant-type ones and non-dispersant type ones. Examples of the non-dispersant type include polymers and copolymers of the above-described (meth)acrylic ester, and hydrides thereof. Examples of the dispersant type include a copolymer of the above-described (meth)acrylic ester and a polar monomer having a dispersibility, such as diethylaminoethyl methacrylate. The olefin polymer-based viscosity index improver also includes dispersant-type ones and non-dispersant type ones. According to the present embodiment, either a dispersant-type viscosity index improver or a non-dispersant type viscosity index improver may be used, but the viscosity index improver is preferably a non-dispersant type from the viewpoint of improving the seizure resistance and the copper corrosion resistance.

The mass average molecular weight (Mw) of the viscosity index improver is generally 5,000 or more and 1,000,000 or less. When the viscosity index improver is the polymethacrylate-based viscosity index improver, it is preferably 10,000 or more, more preferably 15,000 or more, even more preferably 20,000 or more, and particularly preferably 25,000 or more, from the viewpoint of improving the seizure resistance and the copper corrosion resistance. The upper limit is preferably 350,000 or less, more preferably 300,000 or less, even more preferably 250,000 or less, and particularly preferably 225,000 or less. When the viscosity index improver is the olefin polymer-based viscosity index improver, from the same viewpoint, it is preferably 5,000 or more, more preferably 10,000 or more, and even more preferably 15,000 or more. The upper limit is preferably 800,000 or less, more preferably 500,000 or less, and even more preferably 400,000 or less.

In this description, the mass average molecular weight (Mw) is a value measured in accordance with ASTM D2502.

From the viewpoint of improving the seizure resistance and the copper corrosion resistance, the content of the viscosity index improver based on the total amount of the composition is preferably 1% by mass or more, more preferably 3% by mass or more, even more preferably 5% by mass or more, and particularly preferably 10% by mass or more. The upper limit is preferably 30% by mass or less, more preferably 25% by mass or less, even more preferably 22% by mass or less, and particularly preferably 20% by mass or less. The viscosity index improver may be used in a form with a dilution oil, and in this case, the content of the viscosity index improver is the content of the viscosity index improver excluding the diluent oil. The diluent oil may be appropriately selected from the above mineral oils and synthetic oils exemplified as those which can be used as the base oil.

### [Other additives]

The lubricating oil composition for a transmission according to the present embodiment may contain an additive for lubricating oil which is more generally used, as necessary, as long as the effects of the present invention are not impaired.

Examples of such an additive for lubricating oil include an antioxidant, a metal-based detergent, a dispersant, and an anti-foaming agent.

Examples of the antioxidant include amine-based antioxidants such as a diphenylamine-based antioxidant and a naphthylamine-based antioxidant; and phenol-based antioxidants such as a monophenol-based antioxidant, diphenol-based antioxidant, and a hindered phenol-based antioxidant.

Examples of the metal-based detergent include a metal sulfonate, a metal phenate, and a metal salicylate. Examples of the metal include alkali metals such as sodium and potassium, and alkaline earth metals such as magnesium, calcium, and barium.

Examples of the dispersant include dispersants other than the above succinimide-based dispersants, for example, ash-free dispersants such as benzylamines, boron-containing benzylamines, succinates, and mono or dicarboxylic acid amides of typically fatty acids or succinic acid.

Examples of the anti-foaming agent include silicone oils, fluorosilicone oils, and fluoroalkyl ethers.

In addition to the above additives, the lubricating oil composition for a transmission according to the present embodiment may contain, for example, a pour point depressant, an anti-wear agent, an extreme-pressure agent, a friction modifier, a rust inhibitor, and a metal deactivator. A compound having a plurality of functions which the above additives have (for example, a compound having a function as the anti-wear agent and a function as the extreme-pressure agent) may be used. As the additive for lubricating oil, a commercially available additive package containing a plurality of additives may be used. In the present embodiment, the above additives may be used alone or in combination of two or more kinds thereof.

The lubricating oil composition for a transmission according to the present embodiment may contain the base oil (A), the sulfur-containing compound (B), and the thiadiazole compound (C), or may contain the base oil (A), the sulfur-containing compound (B), the thiadiazole compound (C), and the viscosity index improver (D) which may be preferably used, or may contain, along with an additive selected from various additives exemplified as the additive for lubricating oil, the base oil (A), the sulfur-containing compound (B), and the thiadiazole compound (C), or the base oil (A), the sulfur-containing compound (B), the thiadiazole compound (C), and the viscosity index improver (D).

The content of each of the additives may be appropriately adjusted according to the type of the additive as long as the effects of the present invention are not impaired. When the additive is contained, based on the total amount of the composition, it is generally 0.01% by mass or more and 15% by mass or less, preferably 0.05% by mass or more, more preferably 0.1% by mass or more, even more preferably 0.3% by mass or more, and particularly preferably 0.5% by mass or more. The upper limit is preferably 15% by mass or less, more preferably 12% by mass or less, and even more preferably 10% by mass or less.

### [Various physical properties of lubricating oil composition]

The kinematic viscosity at 100°C of the lubricating oil composition for a transmission according to the present embodiment is preferably 5 mm²/s or more, more preferably 5.5 mm²/s or more, and even more preferably 6 mm²/s or more. The upper limit is preferably 8 mm²/s or less, more preferably 7.5 mm²/s or less, and even more preferably 7 mm²/s or less. The kinematic viscosity at 40°C of the lubricating oil composition according to the present embodiment is preferably 15 mm²/s or more, more preferably 18 mm²/s or more, and even more preferably 20 mm²/s or more. The upper limit is preferably 50 mm²/s or less, more preferably 40 mm²/s or less, and even more preferably 30 mm²/s or less. When the kinematic viscosity is within the above range, the lubricating oil composition for a transmission is more appropriate, and the seizure resistance and the copper corrosion resistance are improved.

From the same viewpoint, the viscosity index of the lubricating oil composition for a transmission is preferably 160 or more, more preferably 200 or more, and even more preferably 240 or more.

In the lubricating oil composition for a transmission according to the present embodiment, the content of sulfur atoms based on the total amount of the composition is preferably 0.03% by mass or more, more preferably 0.04% by mass or more, and even more preferably 0.05% by mass or more. The upper limit is preferably 1% by mass or less, more preferably 0.5% by mass or less, and even more preferably 0.2% by mass or less. When the content of the sulfur atoms is within the above range, the effect of adding the sulfur-containing compound (B) and the thiadiazole compound (C) is efficiently obtained, and the seizure resistance and the copper corrosion resistance are improved.

In the lubricating oil composition for a transmission according to the present embodiment, a seizure load by a FALEX seizure test is preferably 3,400 N or more, more preferably 3,450 N or more, and even more preferably 3,500 N or more. Here, the seizure load by the FALEX seizure test is a value measured by a method described in Examples. Accordingly, the lubricating oil composition for a transmission according to the present embodiment has a high seizure load by the FALEX seizure test, and has excellent seizure resistance.

### [Application]

As described above, the lubricating oil composition for a transmission according to the present embodiment is excellent in seizure resistance and copper corrosion resistance, and is suitably used in a transmission for automobiles such as gasoline vehicles, hybrid vehicles, and electric vehicles, and a transmission for construction or civil engineering machines. Since the lubricating oil composition for a transmission according to the present embodiment has excellent copper corrosion resistance, it is further suitably used in hybrid vehicles and electric vehicles equipped with electric parts such as an electric motor and a generator, and is particularly suitably used for a transmission of hybrid vehicles and electric vehicles, in which the electric motor is cooled by an oil cooling method. The transmission may be any of a manual transmission, an automatic transmission, and a continuously variable transmission.

Although the lubricating oil composition according to the present embodiment is for a transmission, it may also be used for applications other than the transmission, for example, gasoline engines, diesel engines, other internal combustion engines, vehicle gears, other general machinery industrial gears, hydraulic machinery, turbines, compressors, working machines, cutting machines, and machines equipped with body bearings or ball bearings.

### [Method for lubricating transmission]

A method for lubricating a transmission according to the present embodiment uses a lubricating oil composition for a transmission containing a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2), that is, the lubricating method uses the lubricating oil composition for a transmission according to the above present embodiment. The lubricating oil composition for a transmission used in the lubricating method according to the present embodiment is excellent in seizure resistance and copper corrosion resistance. Therefore, the method for lubricating a transmission according to the present embodiment is suitably adopted for the method for lubricating a transmission for automobiles such as gasoline vehicles, hybrid vehicles, and electric vehicles, or a transmission for construction or civil engineering machines. In addition, since the lubricating oil composition for a transmission according to the present embodiment has excellent copper corrosion resistance, it is suitably used in hybrid vehicles and electric vehicles equipped with electric parts such as an electric motor and a generator, and is particularly suitably used for a transmission of hybrid vehicles and electric vehicles, in which the electric motor is cooled by an oil cooling method. The transmission may be any of a manual transmission, an automatic transmission, and a continuously variable transmission.

### [Transmission]

A transmission according to the present embodiment is provided with a lubricating oil composition for a transmission containing a base oil (A), a sulfur-containing compound (B) having no -Sₙ₁₁- (nn is an integer of 2 or more), and a thiadiazole compound (C) having an -Sₙ₂₁-R²¹ group (R²¹ is a linear hydrocarbon group having 1 or more and 24 or less carbon atoms, and n₂₁ is 1 or 2), that is, the transmission is provided with the lubricating oil composition for a transmission according to the above present embodiment. The lubricating oil composition used in the transmission according to the present embodiment is excellent in seizure resistance and copper corrosion resistance. Therefore, the transmission according to the present embodiment is suitably adopted for the lubricating method for a transmission for automobiles such as gasoline vehicles, hybrid vehicles, and electric vehicles, or a transmission for construction or civil engineering machines. Since the lubricating oil composition for a transmission according to the present embodiment has excellent copper corrosion resistance, it is suitably used in hybrid vehicles and electric vehicles equipped with electric parts such as an electric motor and a generator, and is particularly suitably used for a transmission of hybrid vehicles and electric vehicles, in which the electric motor is cooled by an oil cooling method. The transmission may be any of a manual transmission, an automatic transmission, and a continuously variable transmission.

### Examples

Next, the present invention is described in more detail with reference to Examples, but the present invention is not limited at all by the Examples.

### Example 1 and Comparative Examples 1 to 7

Lubricating oil compositions were prepared in the blending formulation (% by mass) shown in Table 1. The obtained lubricating oil compositions were tested variously according to the methods mentioned below to evaluate the physical properties thereof. The evaluation results are shown in Table 1.

The properties of the lubricating oil compositions were measured and evaluated according to the following methods.

### (1) Kinematic viscosity

The kinematic viscosity at 40°C and 100°C was measured according to JIS K 2283:2000.

### (2) Viscosity index (VI)

Measured according to JIS K 2283:2000.
Measured according to JIS K 2249:2011.

### (3) Content of sulfur atoms

Measured according to JIS-5S-38-92.

### (4) Measurement of seizure load by FALEX seizure test

The seizure load was measured using a FALEX test machine described in ASTM D3233 and the seizure resistance was evaluated. A larger the seizure load indicates more excellent seizure resistance. The specific test conditions were as follows, and after the following running-in time, the load was continuously increased (1,680 N/min) to measure the seizure load (N).

### •Test jig:

Test pin: SUJ-2
Test block: SKH51

### •Test condition:

Oil temperature: 100°C
Running-in load: 900 N
Running-in time: 300 sec

### (5) Copper corrosion test

A copper plate (30 mm × 10 mm × 0.5 mm) was suspended at a height of 10 mm from the liquid surface in a container filled with 250 ml of lubricating oil composition according to each of Example and Comparative Examples, and the lubricating oil composition was held at 170°C and allowed to stand for 24 hours. The presence or absence of corrosion of the copper plate after standing for 24 hours was evaluated according to the following criteria. A smaller proportion of the surface area of the copper plate which is corroded and changed to black indicates more excellent copper corrosion resistance.
A: The area which is corroded and changed to black was less than 10%.
B: The area which is corroded and changed to black was 10% or more and less than 50%.
C: The area which is corroded and changed to black was 50% or more.

**Table 1**

| | | | Example | Comparative Example | | | | | | |
|---|---|---|---|---|---|---|---|---|---|---|
| | | | 1 | 1 | 2 | 3 | 4 | 5 | 6 | 7 |
| | (A) Base oil 1 | % by mass | 36.56 | 36.57 | 36.67 | 36.17 | 36.42 | 36.35 | 36.57 | 36.57 |
| | (A) Base oil:2 | % by mass | 25.48 | 25.48 | 25.48 | 25.48 | 25.48 | 25.48 | 25.48 | 25.48 |
| | (A) Base oil:3 | % by mass | 12.50 | 12.50 | 12.50 | 12.50 | 12.50 | 12.50 | 12.50 | 12.50 |
| | (B) Sulfur-containing compound 1 | % by mass | 0.50 | 0.50 | 0.50 | 0.50 | 0.50 | 0.50 | 0.50 | 0.50 |
| | (C) Thiadiazole compound | % by mass | 0.11 | - | - | - | - | - | - | - |
| | Sulfur-containing compound 2 | % by mass | - | 0.10 | - | - | - | - | - | - |
| | Sulfur-containing compound 3 | % by mass | - | - | - | 0.50 | - | - | - | - |
| Blending formulation | Sulfur-containing compound 4 | % by mass | - | - | - | - | 0.25 | - | - | - |
| | Sulfur-containing compound 5 | % by mass | - | - | - | - | - | 0.32 | - | - |
| | Sulfur-containing compound 6 | % by mass | - | - | - | - | - | - | 0.10 | - |
| | Sulfur-containing compound 7 | % by mass | - | - | - | - | - | - | - | 0.10 |
| | (D) PMA1 | % by mass | 0.20 | 0.20 | 0.20 | 0.20 | 0.20 | 0.20 | 0.20 | 0.20 |
| | (D) PMA2 | % by mass | 10.00 | 10.00 | 10.00 | 10.00 | 10.00 | 10.00 | 10.00 | 10.00 |
| | (D) PMA3 | % by mass | 6.80 | 6.80 | 6.80 | 6.80 | 6.80 | 6.80 | 6.80 | 6.80 |
| | Other additives | % by mass | 7.85 | 7.85 | 7.85 | 7.85 | 7.85 | 7.85 | 7.85 | 7.85 |
| | Total | % by mass | 100.00 | 100.00 | 100.00 | 100.00 | 100.00 | 100.00 | 100.00 | 100.00 |
| Properties | Kinematic viscosity at 40°C | mm²/s | 24.89 | 24.85 | 24.98 | 24.81 | 24.96 | 24.32 | - | - |
| | Kinematic viscosity at 100°C | mm²/s | 6.84 | 6.82 | 6.87 | 6.84 | 6.88 | 6.74 | - | - |
| | Viscosity Index | - | 258 | 257 | 259 | 259 | 260 | 260 | - | - |
| | Content of sulfur atoms | % by mass | 0.08 | 0.08 | 0.04 | 0.08 | 0.08 | 0.08 | 0.08 | 0.08 |
| Evaluation | Seizure load in FALEX seizure test | N | 3,600 | 3,370 | 2,910 | 3,180 | 3,180 | 3,140 | - | - |
| | Appearance evaluation | - | A | C | A | A | B | B | C | C |

Details of each component shown in Table 1 used in the Examples are as follows.
- Base oil 1: 60 N hydrorefining oil (kinematic viscosity at 100°C: 2.3 mm²/s, kinematic viscosity at 40°C: 7.8 mm²/s, viscosity index: 115)
- Base oil 2: 60 N hydrorefining oil (kinematic viscosity at 100°C: 2.7 mm²/s, kinematic viscosity at 40°C: 9.9 mm²/s, viscosity index: 114)
- Base oil 3: 150 N hydrorefining oil (kinematic viscosity at 100°C: 6.5 mm²/s, kinematic viscosity at 40°C: 36.8 mm²/s, viscosity index: 131)
- (B) Sulfur-containing compound 1: sulfur-containing compound having no dithiopropionate (-Sn₁₁- (n₁₁ is an integer of 2 more), and in the general formula (1), R¹¹ is a -CH₂-CH₂-(1,2-ethylene group) and R¹² is a tridecyl group)
- (C) Thiadiazole compound: thiadiazole compound having a linear thiadiazole (-Sₙ₂₁-R²¹ group (where R²¹ is a linear hydrocarbon group having 1 or more and 24 or less carbon atoms, and n₂₁ is 1 or 2), and in the general formula (2-1), R²² and R²³ are each a n-octyl group and n₂₂ and n₂₃ are each 2)
- Sulfur-containing compounds 2: branched thiadiazole (in the general formula (2-1), R²² and R²³ are each a tert-nonyl group (branched alkyl group), and n₂₂ and n₂₃ are each 2)
- Sulfur-containing compound 3: sulfolane
- Sulfur-containing compound 4: dithiocarbamic acid derivative Sulfur-containing compound 5: sulfurized lard
- Sulfur-containing compound 6: polysulfide (trisulfide having -S-S-S-, kinematic viscosity at 100°C: 6.0 mm²/s, density (15°C): 1.010 g/cm³, sulfur content: 38.0% by mass)
- Sulfur-containing compounds 7: polysulfide (disulfide having -S-S-, kinematic viscosity at 100°C: 3.0 mm²/s, density (15°C): 0.990 g/cm³, sulfur content: 38.8% by mass)
- (D) PMA 1: polymethacrylate (mass average molecular weight (Mw): 52,000, non-dispersant type)
- (D) PMA 2: polymethacrylate (mass average molecular weight (Mw): 31,000, non-dispersant type)
- (D) PMA 3: polymethacrylate (mass average molecular weight (Mw): 200,000, non-dispersant type)
- Other additives: antioxidants (phenol-based and amine-based), metal-based detergent (calcium sulfonate), dispersant (polybutenyl succinimide), anti-foaming agent, and the like.

The results in Table 1 confirm that the lubricating oil composition of Example 1 is excellent in seizure resistance and copper corrosion resistance.

With respect to the lubricating oil composition of Comparative Example 1 using the thiadiazole compound having a branched hydrocarbon group in the molecule instead of the thiadiazole compound (C), most of the copper plate is corroded, and therefore, the copper corrosion resistance is poor. From the comparison between Example 1 and Comparative Example 1, it is confirmed that even with the same thiadiazole compound, the thiadiazole compound having a linear hydrocarbon group used in the present embodiment and the thiadiazole compound having a branched hydrocarbon group have a large difference in copper corrosion resistance.

In addition, in the lubricating oil composition of Comparative Example 2 not containing the thiadiazole compound (C), and the lubricating oil compositions of Comparative Examples 3 to 7 using a sulfur-containing compound other than the sulfur-containing compound (B) used in the present embodiment instead of the thiadiazole compound (C), the lubricating oil compositions of Comparative Examples 2 to 5 are inferior in seizure resistance since the seizure load is 2,910 N to 3,180 N, which is smaller than that of Example 1. Although the copper corrosion resistance of the lubricating oil compositions of Comparative Examples 2 and 3 is excellent, the copper corrosion resistance of the lubricating oil compositions of Comparative Examples 4 to 7 is inferior to those of Examples. Since the lubricating oil compositions of Comparative Examples 6 and 7 have extremely poor copper corrosion resistance, the seizure load is not measured.

As described above, it is confirmed that excellent seizure resistance and copper corrosion resistance are obtained only in the constitution according to the present embodiment, that is, the constitution containing a base oil (A), a predetermined sulfur-containing compound (B), and a predetermined thiadiazole compound (C).

### Industrial Applicability

The lubricating oil composition for a transmission according to the present embodiment is excellent in seizure resistance and copper corrosion resistance. Accordingly, the lubricating oil composition is suitably used for a transmission for automobiles such as gasoline vehicles, hybrid vehicles, and electric vehicles, and a transmission for construction or civil engineering machines. Since the lubricating oil composition has excellent copper corrosion resistance, it is suitably used in hybrid vehicles and electric vehicles equipped with electric parts such as an electric motor and a generator, and is particularly suitably used for a transmission of hybrid vehicles and electric vehicles, in which the electric motor is cooled by an oil cooling manner. The lubricating oil composition is suitably used for any transmission such as a manual transmission, an automatic transmission, and a continuously variable transmission.

## Claims

1. A lubricating oil composition for a transmission, comprising a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).

2. The lubricating oil composition for a transmission according to claim 1, wherein the sulfur-containing compound (B) is a compound represented by the following general formula (1):
S(̵R¹¹COOR¹²)₂ (1)
wherein R¹¹ is a hydrocarbon group having 1 or more and 8 or less carbon atoms, and R¹² is a hydrocarbon group having 1 or more and 30 or less carbon atoms; and plural R^{11'}s may be the same or different and plural R^{12'}s may be the same or different.

3. The lubricating oil composition for a transmission according to claim 1 or 2, wherein the thiadiazole compound (C) is at least one selected from compounds represented by the following general formulae (2-1) to (2-3): 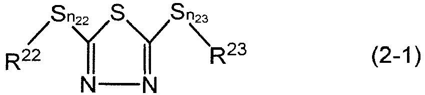 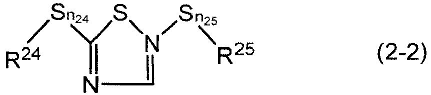 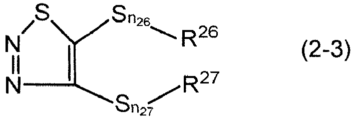 wherein R²² to R²⁷ each independently represent a linear hydrocarbon group having 1 or more and 24 or less carbon atoms, and n₂₂ to n₂₇ are each independently 1 or 2.

4. The lubricating oil composition for a transmission according to any one of claims 1 to 3, wherein a content of sulfur atoms based on a total amount of the composition is 0.03% by mass or more and 1% by mass or less.

5. The lubricating oil composition for a transmission according to any one of claims 1 to 4, further comprising a viscosity index improver (D).

6. The lubricating oil composition for a transmission according to any one of claims 1 to 5, wherein the viscosity index improver (D) is polymethacrylate.

7. The lubricating oil composition for a transmission according to any one of claims 1 to 6, which has a kinematic viscosity at 100°C of 5 mm²/s or more and 8 mm²/s or less.

8. The lubricating oil composition for a transmission according to any one of claims 1 to 7, which is used in an electric vehicle or a hybrid vehicle.

9. A method for lubricating a transmission, comprising using a lubricating oil composition for a transmission comprising a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).

10. A transmission, which is provided with a lubricating oil composition for a transmission containing a base oil (A), a sulfur-containing compound (B) having no -Sₙ₁₁- (where n₁₁ is an integer of 2 or more), and a thiadiazole compound (C) having an -Sₙ₂₁-R²¹ group (where R²¹ is a linear hydrocarbon group having 1 or more and 24 or less carbon atoms, and n₂₁ is 1 or 2).
